Europäisches Patentamt

European Patent Office

Office européen des brevets

(11) Veröffentlichungsnummer: **0 072 343**
**A1**

## (12) EUROPÄISCHE PATENTANMELDUNG

(21) Anmeldenummer: 82730104.5

(22) Anmeldetag: 04.08.82

(51) Int. Cl.³: **B 64 C 1/00,** B 64 C 1/14, B 64 C 11/28, B 64 C 31/02, B 64 D 27/08

(30) Priorität: 04.08.81 DE 3131248

(43) Veröffentlichungstag der Anmeldung: 16.02.83 Patentblatt 83/7

(84) Benannte Vertragsstaaten: DE FR GB

(71) Anmelder: Wolf Hoffmann Flugzeugbau KG, Hauptstrasse 13, D-8041 Haimhausen (DE)

(72) Erfinder: Hoffmann, Wolf-Dietrich, Dipl.-Ing., Hauptstrasse 14, D-8061 Sulzemoos (DE)

(74) Vertreter: Jander, Dieter, Dipl.-Ing. et al, Dipl.-Ing. Dieter Jander Dr.-Ing. Manfred Böning Patentanwälte Kurfürstendamm 66, D-1000 Berlin 15 (DE)

(54) Flugzeug.

(57) Flugzeug mit einem Propeller (3) an der Rumpfspitze und einem Motor (1) hinter, insbesondere unmittelbar hinter zwei nebeneinander angeordneten Pilotensitzen. Die Erfindung besteht darin, dass das Rumpfvorderteil, abgesehen von der Propeller-Nabe, weitgehend durchsichtig ist und von einer Mittelkonsole (4) durchzogen wird, die die im Rumpfvorderteil befindlichen Teile, insbesondere die Pilotensitze, das Armaturenbrett, die Steuerorgane und ein Lager für die Propellerwelle (2) trägt, und durch die die Propellerwelle (2) hindurchläuft. Auf diese Weise wird erreicht, dass das Flugzeug hervorragende Sichtverhältnisse besitzt.

(Fig. 1)

Flugzeug

Die Erfindung bezieht sich auf ein Flugzeug mit einem Propeller an der Rumpfspitze und einem Motor hinter, insbesondere unmittelbar hinter zwei nebeneinander angeordneten Pilotensitzen.

Bei einem bekannten Flugzeug dieser Art (DE-OS 28 14 586) ist das Rumpfvorderteil nur oben teilweise durchsichtig, und die im Rumpfvorderteil befindlichen Teile werden von Seitenwandbereichen getragen.

Der Erfindung liegt die Aufgabe zugrunde, das bekannte Flugzeug derart auszubilden, daß die Sichtverhältnisse verbessert sind.

Diese Aufgabe wird erfindungsgemäß dadurch gelöst, daß das Rumpfvorderteil, abgesehen von der Propeller-Nabe, weitgehend durchsichtig ist und von einer Mittelkonsole durchzogen wird, die die im Rumpfvorderteil befindlichen Teile, insbesondere die Pilotensitze, das Armaturenbrett, die Steuerorgane und ein Lager für die Propellerwelle, trägt und durch die die Propellerwelle hindurchläuft.

Sind die Wandbereiche des Rumpfvorderteils weitgehend durchsichtig, können sie nicht mehr tragende Elemente sein. Diese Aufgabe übernimmt die Mittelkonsole.

Das erfindungsgemässe Flugzeug ist als Sportflugzeug (Motorsegler) und als Dienstflugzeug (Beobachtungsflugzeug, z.B. für die Polizei) besonders geeignet.

- 2 -

Ferner wird vorgeschlagen, daß das Armaturenbrett
eine solche Größe hat, daß es oben und seitlich
(etwa) innerhalb des Sichtkegels liegt, der von
den Augen eines Piloten ausgeht und durch den Rand
der Propeller-Nabe läuft.

Ferner wird vorgeschlagen, daß die Linie zwischen
durchsichtigem und undurchsichtigem Bereich auf einer
Seite des Rumpfes von vorne unten schräg nach hinten
oben verläuft, insbesondere derart, daß weitgehend
all das durchsichtig ist, was nicht durch Piloten-
körperteile, insbesondere die Schulter und die Arme,
verdeckt ist und/oder insbesondere derart, daß die
Linie in die Kontur des vertikalen Längsschnittes
des Rumpfes oben (etwa) senkrecht und unten (etwa)
tangential einmündet.

Sodann wird vorgeschlagen, daß der durchsichtige
Teil abklappbare Haube ist.

Weiter wird vorgeschlagen, daß die Mittelkonsole
von einem Hauptspant, insbesondere einem solchen, der
sich unmittelbar hinter den Pilotensitzen befindet,
aus nach vorn kragt.

Sodann wird vorgeschlagen, daß oben von dem vorderen
Ende der Mittelkonsole aus nach hinten eine Längsstrebe verläuft, an der rechts und links je eine abklappbare Haubenhälfte angelenkt ist.

Außerdem wird vorgeschlagen, daß oben hinter den Pilotensitzen ein Querbügel verläuft, in den die Längsstrebe einmündet und der insbesondere Teil der Linie
zwischen Durchsichtigem und Undurchsichtigem ist.

Sodann wird vorgeschlagen, daß sich hinter dem Querbügel ein weiterer durchsichtiger Teil der Flugzeugwand befindet, der nicht abklappbar ist.

Ferner wird vorgeschlagen, daß die Mittelkonsole
zwischen den Pilotensitzen in der Höhe vom Boden
bis kurz über die Flugzeugmittelebene reicht.

Sodann wird vorgeschlagen, daß die Mittelkonsole und
die verbleibende tragende Wand des Flugzeugvorderteils ein Stück bilden.

Außerdem wird vorgeschlagen, daß der Kühlluft-Einlauf
für den Motor im Propellerstrahl, insbesondere auf
der Rumpfunterseite, insbesondere kurz hinter dem
Propeller angeordnet ist.

Sodann wird vorgeschlagen, daß sich die Treibstofftanks in den Flächen befinden.

Schließlich wird vorgeschlagen, daß die Blätter des
Propellers nach vorn geklappt und in die Mittelkonsole eingezogen werden können, wobei insbesondere die
Rumpfspitze abklappbar ist. Auf diese Weise ist es
möglich, dem Flugzeug hervorragende Segelflugeigenschaften zu verleihen. Dieses Ziel könnte man andererseits auch dadurch erreichen, daß man die Propellerblätter nicht einziehbar ausbildet, indessen erfindungsgemäß dafür sorgt, daß sie in eine Segelstellung
gebracht werden können, d.h. in eine solche Stellung,
in der sie weitgehend parallel zur Flugzeuglängsachse,
insbesondere bei horizontaler Lage, verlaufen.

Weitere Einzelheiten der Erfindung ergeben sich aus
der Zeichnung. Darin zeigen:

Figur 1 einen Längsschnitt durch eine erste Ausführungsform der Erfindung;

Figur 2 eine Vorderansicht einer zweiten Ausführungsform der Erfindung;

Figur 3 eine Längsansicht dazu und

Figur 4 eine Draufsicht dazu.

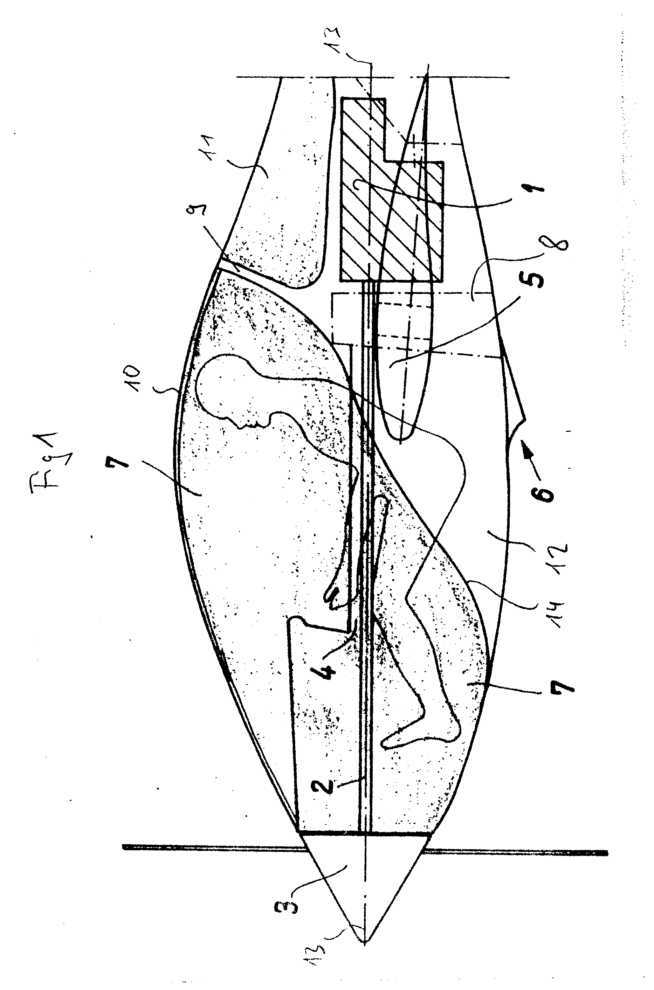

In Figur 1 ist mit 1 ein Motor, mit 2 eine Fernwelle, mit 3 ein Propeller, mit 4 eine Mittelkonsole, mit 5 ein Flügel, mit 6 ein Kühllufteinlaß für den Motor, mit 7 ein durchsichtiges Wandstück, mit 8 ein Hauptspant, von dem aus die Mittelkonsole 4 nach vorne ragt, mit 9 ein Querbügel, mit 10 eine Längsstrebe, die einerseits an dem Querbügel 9 und andererseits vorne an der Mittelkonsole befestigt ist, und an der zwei Haubenhälften seitlich abklappbar angelenkt sind, und mit 11 ein weiteres durchsichtiges, aber nicht abklappbares Wandstück bezeichnet.

Die Mittelkonsole 4 weist im Querschnitt die Form etwa eines umgekehrten U auf. Sie reicht unten bis zu dem undurchsichtigen Wandteil 12, das Boden und teilweise Seitenwand des Rumpfvorderteils bildet. Nach oben reicht die Konsole bis kurz über die Flugzeuglängsachse 13.

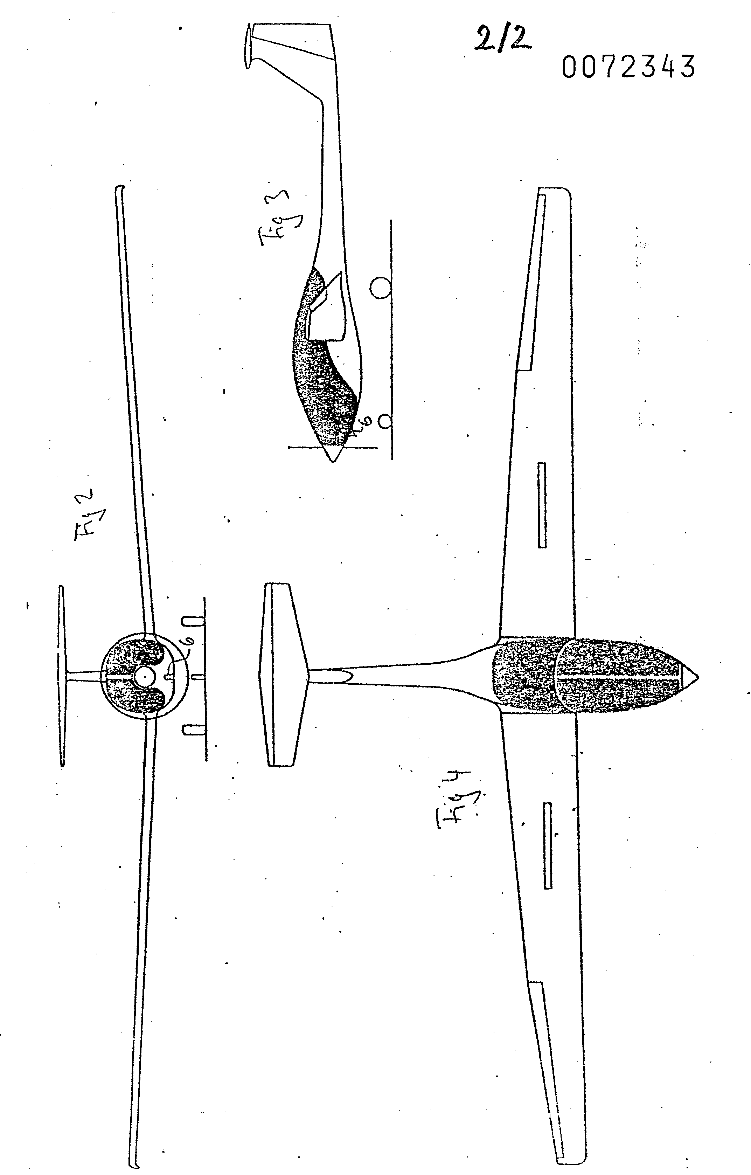

In den Figuren 2 - 4 ist ein anderes Ausführungsbeispiel veranschaulicht. Der Kühllufteinlaß 6 für den Motor befindet sich in diesem Falle unmittelbar hinter dem Propeller.

Patentansprüche :

1. Flugzeug mit einem Propeller (3) an der Rumpfspitze und einem Motor (1) hinter, insbesondere
   unmittelbar hinter zwei nebeneinander angeordneten Pilotensitzen,
   dadurch gekennzeichnet,
   daß das Rumpfvorderteil, abgesehen von der Propeller-Nabe, weitgehend durchsichtig ist und von
   einer Mittelkonsole (4) durchzogen wird, die die
   im Rumpf-Vorderteil befindlichen Teile, insbesondere die Pilotensitze, das Armaturenbrett, die
   Steuerorgane und ein Lager für die Propellerwelle
   (2), trägt  und durch die die Propellerwelle (2)
   hindurchläuft.

2. Flugzeug nach Anspruch 1,
   dadurch gekennzeichnet,
   daß das Armaturenbrett eine solche Größe hat, daß
   es oben und seitlich (etwa) innerhalb des Sichtkegels liegt, der von den Augen eines Piloten ausgeht und durch den Rand der Propeller-Nabe läuft.

3. Flugzeug nach Anspruch 1 oder 2,
   dadurch gekennzeichnet,
   daß die Linie (14) zwischen durchsichtigem und undurchsichtigem Bereich auf einer Seite des Rumpfes
   von vorne unten schräg nach hinten oben verläuft,
   insbesondere derart, daß weitgehend all das durchsichtig ist, was nicht durch Piloten-Körperteile,
   insbesondere die Schulter und die Arme, verdeckt ist
   und/oder insbesondere derart, daß die Linie in die
   Kontur des vertikalen Längsschnittes des Rumpfes
   oben (etwa) senkrecht und unten (etwa) tangential
   einmündet.

4. Flugzeug nach einem oder mehreren der Ansprüche
1 bis 3,
dadurch gekennzeichnet,
daß der durchsichtige Teil (7) abklappbare Haube
ist.

5. Flugzeug nach einem oder mehreren der Ansprüche
1 bis 3,
dadurch gekennzeichnet,
daß die Mittelkonsole (4) von einem Hauptspant,
insbesondere einem solchen, der sich unmittelbar
hinter den Pilotensitzen befindet, aus nach vorn
kragt.

6. Flugzeug nach einem oder mehreren der Ansprüche
1 bis 5,
dadurch gekennzeichnet,
daß oben von dem vorderen Ende der Mittelkonsole
(4) aus nach hinten eine Längsstrebe (10) verläuft,
an der rechts und links je eine abklappbare Haubenhälfte angelenkt ist.

7. Flugzeug nach Anspruch 6,
dadurch gekennzeichnet,
daß oben hinter den Pilotensitzen ein Querbügel (9)
verläuft, in den die Längsstrebe (10) einmündet und
der insbesondere Teil der Linie (14) zwischen Durchsichtigem und Undurchsichtigem ist.

8. Flugzeug nach Anspruch 7,
dadurch gekennzeichnet,
daß sich hinter dem Querbügel (9) ein weiterer durchsichtiger Teil (11) der Flugzeugwand befindet, der
nicht abklappbar ist.

9. Flugzeug nach einem oder mehreren der Ansprüche
1 bis 8,
dadurch gekennzeichnet,
daß die Mittelkonsole (4) zwischen den Pilotensitzen in der Höhe vom Boden (12) bis kurz über
die Flugzeugmittelebene reicht.

10. Flugzeug nach einem oder mehreren der Ansprüche
1 bis 9,
dadurch gekennzeichnet,
daß die Mittelkonsole (4) und die verbleibende
tragende Wand (12) des Flugzeugvorderteils ein
Stück bilden.

11. Flugzeug nach einem oder mehreren der Ansprüche
1 bis 10,
dadurch gekennzeichnet,
daß der Kühllufteinlauf (6) für den Motor (1) im
Propellerstrahl, insbesondere auf der Rumpfunterseite, insbesondere kurz hinter dem Propeller,
angeordnet ist.

12. Flugzeug nach einem oder mehreren der Ansprüche
1 bis 11,
dadurch gekennzeichnet,
daß sich die Treibstofftanks in den Flächen befinden.

13. Flugzeug nach einem oder mehreren der Ansprüche
1 bis 12,
dadurch gekennzeichnet,
daß die Blätter des Propellers (3) nach vorn geklappt und in die Mittelkonsole (4) eingezogen werden können, wobei insbesondere die Rumpfspitze abklappbar ist.

Fig 1

2/2

0072343

Fig 2

Fig 3

Fig 4

0072343

**EUROPÄISCHER RECHERCHENBERICHT**

Europäisches Patentamt

Nummer der Anmeldung

EP 82 73 0104

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| Y | DE-C- 879 514 (ÜBELACKER) *Seite 2, Zeilen 11 bis 17 und 28 bis 35; Figuren* | 1 | B 64 C 1/00 B 64 C 1/14 B 64 C 11/28 B 64 C 31/02 B 64 D 27/08 |
| | --- | | |
| Y | FR-A- 894 470 (DORNIER-WERKE) *Vollständig* | 1 | |
| | --- | | |
| A | DE-A-2 923 400 (JANDER) *Anspruch 1* | 13 | |
| | --- | | |
| A | US-A-2 375 924 (JOHNSON) *Vollständig* | 4 | |
| | --- | | |
| A | DE-C-1 286 407 (VEREINIGTE FLUGTECHNISCHE WERKE) *Vollständig* | 1 | |
| | ----- | | |

| RECHERCHIERTE SACHGEBIETE (Int. Cl. ³) |
|---|
| B 64 C B 64 D |

Der vorliegende Recherchenbericht wurde für alle Patentansprüche erstellt.

| Recherchenort | Abschlußdatum der Recherche | Prüfer |
|---|---|---|
| DEN HAAG | 19-10-1982 | ZERI A. |